# EUROPÄISCHE PATENTSCHRIFT

(11) **EP 3 838 713 B1**
(45) Veröffentlichungstag und Bekanntmachung des Hinweises auf die Patenterteilung: **09.08.2023**
(21) Anmeldenummer: 19217521.4
(22) Anmeldetag: 18.12.2019
(51) Int. Cl.: B62B 5/00, B62B 5/08

(54) **ANTRIEBSEINHEIT UND HANDWAGEN**
DRIVE UNIT AND HANDCART
UNITÉ D'ENTRAÎNEMENT ET CHARIOT À MAIN

(43) Veröffentlichungstag der Anmeldung: 23.06.2021
(73) Patentinhaber: Fuxtec GmbH, 71083 Herrenberg (DE)
(72) Erfinder: Gumprecht, Tim, 71120 Grafenau (DE)
(74) Vertreter: Ruckh, Rainer Gerhard

(56) Entgegenhaltungen:
- WO-A1-2017/212184
- US-A1- 2011 308 880
- US-B1- 6 360 836
- US-B1- 10 286 977

## Beschreibung

Die Erfindung betrifft eine Anordnung mit einer Antriebseinheit und einem Handwagen.

Handwagen, auf welche sich die vorliegende Erfindung bezieht, können insbesondere von Bollerwagen gebildet sein. Derartige Bollerwagen weisen generell auf Rädern gelagerte Lastaufnahmemittel auf, die im Wesentlichen von einem Boden und daran gelagerten Geländerelementen bestehen. Ein derartiger Bollerwagen weist eine Deichsel oder einen Handgriff auf. Damit kann ein Benutzer den Bollerwagen schieben oder ziehen.

In dem Bollerwagen können Lasten mitgeführt werden. Auch ist es möglich Kinder in einem derartigen Bollerwagen zu transportieren.

Je nach Gewicht der auf dem Bollerwagen befindlichen Lasten und Personen ist ein großer Kraftaufwand der jeweiligen Bedienperson erforderlich, um den Bollerwagen fortzubewegen.

Die US 6 360 836 B1 betrifft eine Anbaueinheit für einen Kinderwagen. Die Anbaueinheit umfasst eine Achse mit zwei Rädern, die von einem Elektromotor angetrieben werden. Die Achse ist mit zwei Gelenkstangen an den Kinderwagen angekoppelt.

Die WO 2017 / 212184 A1 betrifft eine Anbaueinheit für einen Kinderwagen. Die Anbaueinheit umfasst ein motorisch getriebenes Rad an der Unterseite einer Stützplatte. Die Stützplatte kann mit zwei Gelenkstangen am Kinderwagen befestigt werden.

Die US 2011 / 0308880 A1 betrifft eine Hilfsantriebseinheit für einen Rollstuhl. Diese umfasst eine Trägerkonstruktion, die am Rollstuhl befestigt werden kann. An der Trägerkonstruktion wird ein motorisch angetriebenes Rad befestigt.

Die US 10 286 977 B1 betrifft eine Anbaueinheit für eine Gehhilfe. Die Anbaueinheit umfasst ein Trittbrett, an welchem zwei motorisch angetriebene Räder gelagert sind. Weiterhin umfasst die Anbaueinheit einen längenverstellbaren Arm an dessen Enden Klammern zur Befestigung an den Gehilfen vorgesehen sind.

Der Erfindung liegt die Aufgabe zugrunde, die Funktionalität von Handwagen zu erweitern.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Anordnung mit einer Antriebseinheit und einem Handwagen. Die Antriebseinheit ist eine mechanische Schnittstelle, welche zur Verbindung mit dem Handwagen ausgebildet ist. Wenigstens ein Rad, welches mittels eines elektrischen Antriebs angetrieben ist. Eine Steuereinheit, welche zur Steuerung des elektrischen Antriebs ausgebildet ist und Bedienelemente, durch deren Betätigung Steuerbefehle für die Steuereinheit generiert sind, aufweist. Die Anordnung, die ein Basisteil, an welchem das wenigstens eine Rad und der elektrische Antrieb gelagert sind, und gelenkig mit diesem Basisteil verbundene Schnittstellenmittel aufweist. Zwischen dem Basisteil und den Schnittstellenmitteln ist eine Gelenkverbindung vorgesehen, welche Mittel zur Höhenverstellung der Schnittstellenmittel ausbildet. Der Neigungswinkel zwischen dem Basisteil und den Schnittstellenmitteln sind durch Federkräfte von in der Gelenkverbindung vorgesehenen Federelementen stabilisiert.

Mit der Antriebseinheit der erfindungsgemäßen Anordnung wird die Funktionalität des Handwagens erweitert, ohne dessen Grundfunktion, diesen manuell durch Ziehen oder Schieben fortzubewegen zu beeinträchtigen.

Die Grundidee der Erfindung besteht darin, die Antriebseinheit als vom Handwagen völlig separate Einheit auszubilden. Ein Benutzer kann dann den Handwagen wahlweise alleine, das heißt ohne Antriebseinheit nutzen und damit den Handwagen in gewohnter Weise manuell vorwärtsbewegen. Insbesondere dann, wenn mit dem Handwagen schwerere Lasten transportiert werden sollen, kann die Antriebseinheit an den Handwagen montiert werden. Dann kann der Handwagen mittels der Antriebseinheit selbsttätig und vorzugsweise ohne manuelle Unterstützung bewegt werden.

Dabei ist die Antriebseinheit so konzipiert, dass dann, wenn die Antriebseinheit mit der mechanischen Schnittstelle am Handwagen befestigt ist, das wenigstens eine mit dem elektrischen Antrieb angetriebene Rad wie die Räder des Handwagens auf der jeweiligen Unterlage aufliegt, sodass bei aktiviertem elektrischen Antrieb durch das angetriebene wenigstens eine Rad der Handwagen fortbewegt wird.

Über die mit der Steuereinheit in Verbindung stehenden Bedienelemente kann der Benutzer die Antriebseinheit steuern und so insbesondere die Geschwindigkeit des Handwagens vorgeben.

Gemäß einer besonders vorteilhaften Ausführungsform bildet die Antriebseinheit eine modulare Einheit, welche als Nachrüstsatz an einen Handwagen montierbar ist.

Zweckmäßig ist dabei die mechanische Schnittstelle zur Verbindung mit unterschiedlichen Handwagen ausgebildet.

Ein wesentlicher Vorteil hierbei ist, dass die Antriebseinheit an bestehenden, handelsüblichen Handwagen angebracht werden kann, ohne in deren Konstruktion eingreifen zu müssen. Insbesondere ist vorteilhaft, dass keine konstruktiven Maßnahmen am Handwagen vorgesehen werden müssen, damit die Antriebseinheit an diesem befestigt werden kann.

Besonders vorteilhaft hierbei ist, dass die mechanische Schnittstelle eine adaptierbare und damit variable, universelle Schnittstelle derart ausbildet, dass die Antriebseinheit mit unterschiedlichen Handwagen verbunden werden kann. Dadurch ist die Antriebseinheit flexibel und in einem weiten Applikationsbereich einsetzbar. Die Antriebseinheit kann nicht nur für einen Typ von Handwagen in unterschiedlichen Ausführungen, insbesondere Größen eingesetzt werden. Vielmehr kann die Antriebseinheit auch für unterschiedliche Typen Handwagen eingesetzt werden.

So wird besonders bevorzugt die erfindungsgemäße Antriebseinheit für Bollerwagen eingesetzt. Jedoch kann dieselbe Antriebseinheit beispielsweise auch für Kinderwagen oder dergleichen eingesetzt werden.

Erfindungsgemäß weist die Antriebseinheit ein Basisteil, an welchem das wenigstens eine Rad und der elektrische Antrieb gelagert sind, und gelenkig mit diesem Basisteil verbundene Schnittstellenmittel auf.

Das Basisteil, das besonders vorteilhaft in Form einer Grundplatte ausgebildet ist, bildet somit die Lagerung für das wenigstens eine angetriebene Rad aus. Dabei ist das Basisteil nach Befestigen der Antriebseinheit am Handwagen so positioniert, dass das Rad auf der Unterlage, auf dem der Handwagen fährt, sicher aufliegt, sodass das Rad mit dem elektrischen Antrieb seine Antriebsfunktion erfüllen kann.

Der elektrische Antrieb und besonders vorteilhaft auch die Steuereinheit sind an dem Basisteil gelagert.

Besonders vorteilhaft weist die Antriebseinheit eine autarke Energieversorgung auf.

Diese einfache Energieversorgung, die vorteilhaft von einer Batterie oder einem Akkumulator gebildet ist, ist ebenfalls am Basisteil gelagert.

Die Schnittstellenmittel als Bestandteil der mechanischen Schnittstelle dienen zur Befestigung am Handwagen.

Auch die Gelenkverbindung zwischen dem Basisteil und den Schnittstellenmitteln bildet einen Bestandteil der mechanischen Schnittstelle, da diese zweckmäßig Mittel zur Höhenverstellung ausbildet. Hierzu sind erfindungsgemäß Neigungswinkel zwischen dem Basisteil und den Schnittstellenmitteln durch Federkräfte von in der Gelenkverbindung vorgesehenen Federelementen stabilisiert.

Dadurch wird auch unter mechanischer Belastung ein eingestellter Neigungswinkel zwischen Basisteil und den Schnittstellenmitteln sicher beibehalten, wobei zudem auch die Federkräfte das wenigstens eine Rad der Antriebseinheit sicher und mit dem nötigen Anpressdruck auf die Unterlage, auf der der Handwagen fährt, aufliegt. Durch die Variation des Neigungswinkels, die rein manuell und ohne Werkzeuge durchführbar ist, kann die Antriebseinheit einfach an unterschiedliche Höhen des Handwagens angepasst werden.

Die Schnittstellenmittel dienen generell zur mechanischen Fixierung der Antriebseinheit am Handwagen. Besonders vorteilhaft weisen die Schnittstellenmittel erste und zweite Fixiermittel auf, welche in unterschiedlichen Höhenpositionen am Handwagen befestigbar sind.

Dadurch wird eine sichere und steife Mehrpunktverbindung zwischen der Antriebseinheit und dem Handwagen realisiert.

Gemäß einer konstruktiv vorteilhaften Ausgestaltung weisen die Schnittstellenmittel einen Querträger auf, an dessen längsseitigen Enden die ersten Fixiermittel ausbildenden Aufnahmen ein- und ausfahrbar gelagert sind.

Mit den teleskopierbaren Aufnahmen wird eine besonders einfache und flexible Anpassung am Handwagen unterschiedlicher Breiten ermöglicht.

Weiter vorteilhaft sind als zweite Fixiermittel zwei an einem Träger gelagerte Rastbolzen vorgesehen.

Dabei ist an dem Träger der Querträger gelagert.

Die Rastbolzen können in Bohrungen von Elementen des Handwagens eingeführt werden, wodurch schnell eine stabile Verbindung zwischen Handwagen und Antriebseinheit hergestellt werden kann.

Gemäß einer vorteilhaften Ausführungsform kommunizieren die Bedienelemente und die Steuereinheit über eine berührungslos arbeitende Datenübertragungsstrecke.

Insbesondere ist die berührungslos arbeitende Datenübertragungsstrecke eine Bluetooth-Verbindung.

Durch die berührungslos arbeitende Datenübertragungsstrecke kann die Anbringung der Bedienelemente unabhängig von der Position der Steuereinheit gewählt werden. So kann der Benutzer die Bedienelemente an einer ergonomisch günstigen Position am Handwagen, insbesondere an dessen Handgriff, fixieren. Die Bedienelemente können beispielsweise von Tasten, Knöpfen, Hebeln und dergleichen gebildet sein.

Besonders vorteilhaft bilden mechanische Elemente der erfindungsgemäßen Antriebseinheit ein Trittbrett aus, auf welchem insbesondere Kinder stehen können, um mit dem Handwagen mitzufahren.

Die Erfindung wird im Folgenden anhand der Zeichnungen erläutert. Es zeigen:
- Figur 1:: Ausführungsbeispiel der erfindungsgemäßen Antriebseinheit in einer Seitenansicht.
- Figur 2:: Draufsicht auf die Antriebseinheit gemäß Figur 1.
- Figur 3:: Darstellung eines Bollerwagens mit daran befestigter Antriebseinheit in einer ersten Ansicht.
- Figur 4:: Anordnung gemäß Figur 3 in einer zweiten Ansicht.

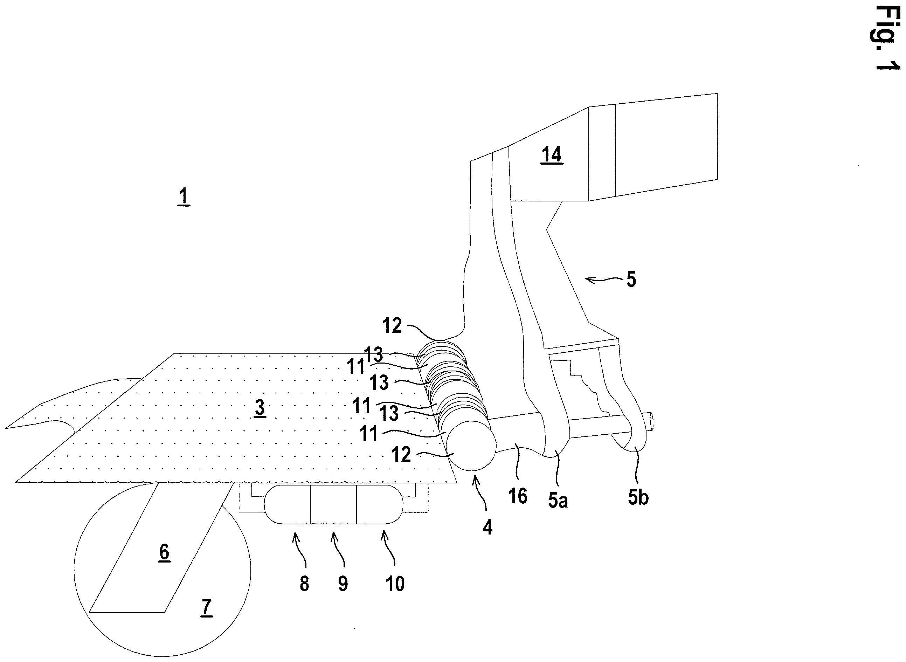

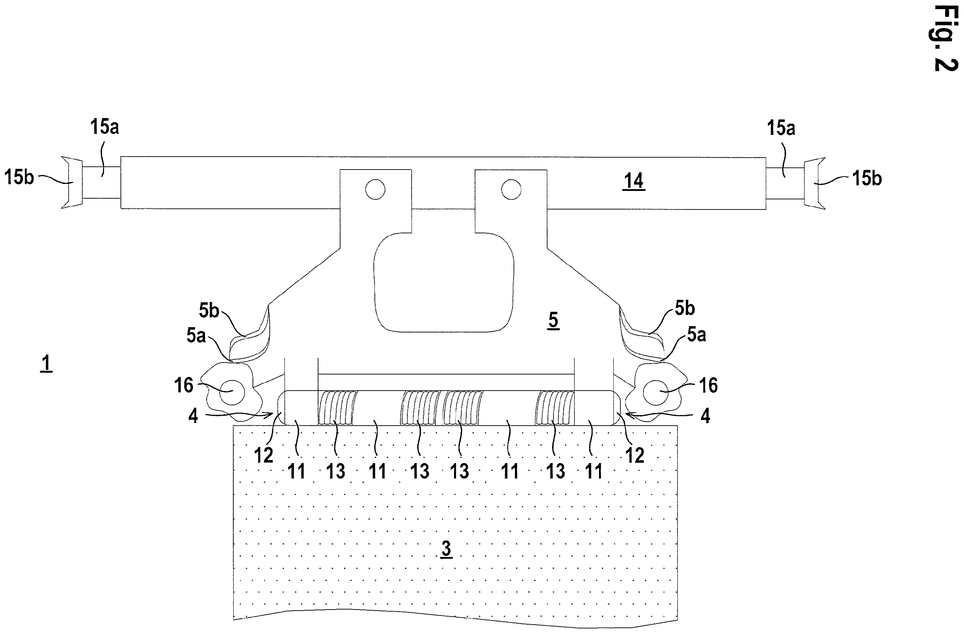

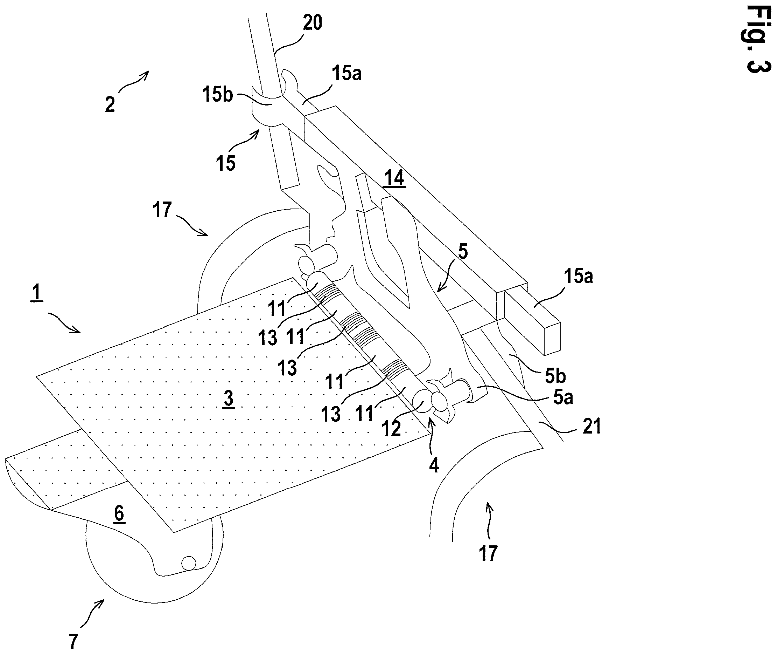

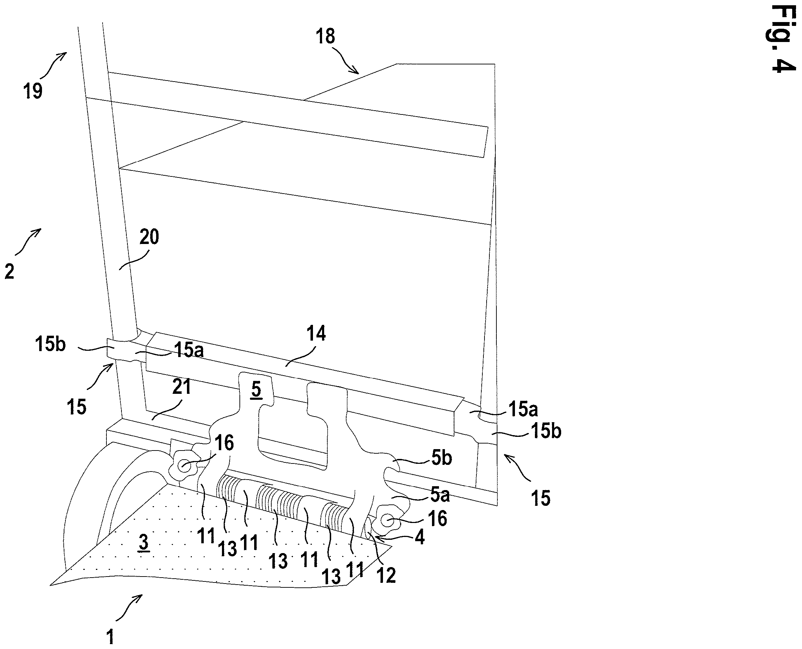

Die Figuren 1 und 2 zeigen ein Ausführungsbeispiel der erfindungsgemäßen Antriebseinheit 1. Die Antriebseinheit 1 bildet eine modulare Einheit, die insbesondere als Nachrüstsatz an einem Handwagen angebaut werden kann, sodass dieser Handwagen nicht mehr manuell fortbewegt werden muss sondern mit der Antriebseinheit 1 selbsttätig, das heißt nur durch die Antriebskraft der Antriebseinheit 1, fortbewegt werden kann. Die Antriebseinheit 1 ist dabei zum Anbau an unterschiedliche Handwagen ausgebildet. Ein Beispiel hierfür zeigen die Figuren 3 und 4. Dort ist die Antriebseinheit 1 der Figuren 1 und 2 an einem Handwagen in Form eines Bollerwagens 2 angebaut.

Die Antriebseinheit 1 umfasst ein Basisteil 3 in Form einer im Wesentlichen rechteckförmigen Grundplatte und einen über eine Gelenkverbindung 4 mit dem Basisteil 3 gelenkig verbundenen Träger 5, an welchem Schnittstellenmittel vorgesehen sind, die Bestandteil einer mechanischen Schnittstelle zur Befestigung an einem Handwagen sind.

An der Unterseite des Basisteils 3 mündet eine Lagerung 6 aus, an welcher ein Rad 7 drehbar gelagert ist. Prinzipiell können auch mehrere Räder 7 vorgesehen sein.

Das Rad 7 wird mittels eines elektrischen Antriebs 8, das heißt einem Elektromotor, angetrieben, der ebenfalls an der Unterseite des Basisteils 3 befestigt ist. Die vom Elektromotor durchgeführten Drehbewegungen werden über nicht dargestellte Umsetzungen auf das Rad 7 übertragen. Der elektrische Antrieb 8 wird von einer Steuereinheit 9 gesteuert, die ebenfalls an der Unterseite des Basisteils 3 gelagert ist. Die Steuereinheit 9 kann von einem Microcontroller oder dergleichen gebildet sein. Die Steuereinheit 9 kann auch mit dem elektrischen Antrieb 8 eine Baueinheit bilden. Schließlich ist an der Unterseite des Basisteils 3 eine autarke Energieversorgung 10 in Form eines Akkumulators oder einer Batterie vorgesehen, welche zur Stromversorgung des elektrischen Antriebs 8 und der Steuereinheit 9 dient.

Die Gelenkverbindung 4 ist von hohlzylindrischen Aufnahmeelementen 11 an einem Rand des Basisteils 3 beziehungsweise an einem Rand des Trägers 5 gebildet. Durch diese Aufnahmeelemente 11 ist eine Welle 12 geführt. Die Gelenkverbindung 4 wird komplettiert von Federelementen 13 in Form von Spiralfedern, die in den Zwischenräumen zwischen den Aufnahmeelementen 11 auf der Welle 12 angeordnet sind. Durch die Gelenkverbindung 4 ist der Neigungswinkel zwischen Basisteil 3 und Träger 5 variabel, wobei ein eingestellter Neigungswinkel durch die Federelemente 13 stabilisiert ist.

An der Oberseite des Trägers 5 ist ein in horizontaler Richtung verlaufender Querträger 14 vorgesehen, der von einem Rechteckprofil gebildet ist. An den längsseitigen Enden des Querträgers 14 ist jeweils eine teleskopierbare, das heißt in Längsrichtung des Querträgers 14 verschiebbare und so aus dem Querträger 14 ausfahrbare beziehungsweise in diesen einfahrbare Aufnahmen 15 gelagert. Die identisch ausgebildeten Aufnahmen 15 weisen jeweils ein im Querträger 14 verschiebbar gelagertes Stangensegment 15a und ein an dessen freiem Ende angeordnetes schalenförmiges Aufnahmesegment 15b auf. Diese Aufnahmen 15 bilden als Schnittstellenmittel erste Fixiermittel zur Befestigung der Antriebseinheit 1 an einem Handwagen.

Wie insbesondere aus Figur 1 ersichtlich, weist der Träger 5 zwei insoweit identische, in Abstand zueinander gelagerte Trägerarme 5a, 5b auf. In einem der Trägerarme 5a sind zwei identisch ausgebildete Rastbolzen 16 verschiebbar gelagert. Die freien Enden der Rastbolzen 16 können durch Bohrungen im zweiten Trägerarm 5b hindurchgesteckt werden. Die Rastbolzen 16 bilden zweite Fixiermittel zur Befestigung der Antriebseinheit 1 an einem Handwagen.

Die Figuren 3 und 4 zeigen die an dem Bollerwagen 2 befestigte Antriebseinheit 1. Der Bollerwagen 2 weist in bekannter Weise eine auf Laufrädern 17 gelagerte Ladefläche 18 und einen Handgriff 19, den ein Benutzer greifen kann um den Bollerwagen 2 manuell geführt fortzubewegen, auf.

Die Antriebseinheit 1 ist am Bollerwagen 2 einerseits dadurch befestigt, dass die Aufnahmesegmente 15b an in vertikaler Richtung verlaufenden Längsstreben 20 des Bollerwagens 2 fixiert sind. Da die Aufnahmen 15 im Querträger 14 teleskopierbar gelagert sind, kann durch Ein- und Ausfahren der Aufnahmen 15 im Querträger 14 eine Anpassung an unterschiedliche Bollerwagen 2 erfolgen.

Die Antriebseinheit 1 ist andererseits durch die Rastbolzen 16 mit dem Bollerwagen 2 verbunden. Zwischen den Trägerarmen 5a, 5b des Trägers 5 der Antriebseinheit 1 liegt eine in horizontaler Richtung verlaufende Querstrebe 21. Zur Fixierung an dieser Querstrebe 21 werden die Rastbolzen 16 am Träger 5 durch Bohrungen dieser Querstrebe 21 gesteckt und dann die freien Enden der Rastbolzen 16 in Bohrungen des zweiten Trägerarms 5b eingeführt.

Mit den Aufnahmen 15 am Querträger 14 und den Rastbolzen 16 wird eine stabile, in mehreren Höhenlagen verlaufende Mehrpunktverbindung zwischen Antriebseinheit 1 und Bollerwagen 2 erhalten.

Wesentlich hierbei ist, dass bei an dem Bollerwagen 2 befestigter Antriebseinheit 1 das Rad 7 dieser Antriebseinheit 1 fest mit den Laufrädern 17 des Bollerwagens 2 auf der Unterlage aufliegen, auf der der Bollerwagen 2 fortbewegt werden soll.

Dies wird insbesondere durch die Gelenkverbindung 4 erreicht. Durch Einstellung des Neigungswinkels zwischen Basisteil 3 und Träger 5 wird erreicht, dass das Rad 7 der Antriebseinheit 1 mit dem nötigen Anpressdruck auf der Unterlage aufliegt. Dies wird durch die Federelemente 13 der Gelenkverbindung 4 erreicht.

Bei an dem Bollerwagen 2 montierter Antriebseinheit 1 kann ein Benutzer durch Eingabe von Steuerbefehlen den elektrischen Antrieb 8 steuern und so den Bollerwagen 2 mit der von ihm gewünschten Geschwindigkeit motorisch getrieben fortbewegen.

Zur Eingabe derartiger Steuerbefehle in die Steuereinheit 9 sind nicht dargestellte Bedienelemente wie Knöpfe, Tasten, Schalter, Hebel und dergleichen vorgesehen. Diese Bedienelemente kommunizieren über eine berührungslos arbeitende Datenübertragungsstrecke, insbesondere einer Bluetooth-Verbindung mit der Steuereinheit 9. Damit können die Bedienelemente an beliebigen Stellen des Bollerwagens 2 angebracht werden, insbesondere in ergonomisch günstigen Anordnungen wie zum Beispiel am Handgriff 19 des Bollerwagens 2.

### Bezugszeichenliste

- (1): Antriebseinheit
- (2): Bollerwagen
- (3): Basisteil
- (4): Gelenkverbindung
- (5): Träger
- (5a, b): Trägerarm
- (6): Lagerung
- (7): Rad
- (8): elektrischer Antrieb
- (9): Steuereinheit
- (10): autarke Energieversorgung
- (11): Aufnahmeelement
- (12): Welle
- (13): Federelement
- (14): Querträger
- (15): Aufnahme
- (15a): Stangensegment
- (15b): Aufnahmesegment
- (16): Rastbolzen
- (17): Laufrad
- (18): Ladefläche
- (19): Handgriff
- (20): Längsstrebe
- (21): Querstrebe

## Patentansprüche

1. Anordnung mit einer Antriebseinheit (1) und einem Handwagen, wobei
die Antriebseinheit eine mechanische Schnittstelle, welche zur Verbindung mit dem Handwagen ausgebildet ist, Schnittstellenmittel, wenigstens ein Rad (7), welches mittels eines elektrischen Antriebs (8) angetrieben ist, eine Steuereinheit (9), welche zur Steuerung des elektrischen Antriebs (8) ausgebildet ist und Bedienelemente, durch deren Betätigung Steuerbefehle für die Steuereinheit (9) generierbar sind, aufweist, wobei die Antriebseinheit ein Basisteil (3), an welchem das wenigstens eine Rad (7) und der elektrische Antrieb (8) gelagert sind, und die gelenkig mit diesem Basisteil (3) verbundenen Schnittstellenmittel aufweist, wobei zwischen dem Basisteil (3) und den Schnittstellenmitteln eine Gelenkverbindung (4) vorgesehen ist, welche Mittel zur Höhenverstellung der Schnittstellenmittel ausbildet,
**dadurch gekennzeichnet, dass** Neigungswinkel zwischen dem Basisteil (3) und den Schnittstellenmitteln durch Federkräfte von in der Gelenkverbindung (4) vorgesehenen Federelementen (13) stabilisiert sind.

2. Anordnung nach Anspruch 1, **dadurch gekennzeichnet, dass** die Antriebseinheit (1) eine modulare Einheit ist, welche als Nachrüstsatz an einen Handwagen montierbar ist.

3. Anordnung nach einem der Ansprüche 1 oder 2, **dadurch gekennzeichnet, dass** die mechanische Schnittstelle zur Verbindung mit unterschiedlichen Handwagen ausgebildet ist.

4. Anordnung nach einen der Ansprüche 1 bis 3, **dadurch gekennzeichnet, dass** die Schnittstellenmittel erste und zweite Fixiermittel aufweisen, welche in unterschiedlichen Höhenpositionen am Handwagen befestigbar sind.

5. Anordnung nach Anspruch 4, **dadurch gekennzeichnet, dass** die Schnittstellenmittel einen Querträger (14) aufweisen, an dessen längsseitigen Enden die ersten Fixiermittel ausbildenden Aufnahmen (15) ein- und ausfahrbar gelagert sind.

6. Anordnung nach Anspruch 5 **dadurch gekennzeichnet, dass** als zweite Fixiermittel zwei an einem Träger (5) gelagerte Rastbolzen (16) vorgesehen sind, wobei an dem Träger (5) der Querträger (14) gelagert ist.

7. Anordnung nach einem der Ansprüche 1 bis 6 **dadurch gekennzeichnet, dass** die Antriebseinheit ein Trittbrett aufweist.

8. Anordnung nach einem der Ansprüche 1 bis 7, **dadurch gekennzeichnet, dass** die Bedienelemente und die Steuereinheit (9) über eine berührungslos arbeitende Datenübertragungsstrecke kommunizieren.

9. Anordnung nach Anspruch 8, **dadurch gekennzeichnet, dass** die berührungslos arbeitende Datenübertragungsstrecke eine Bluetooth-Verbindung ist.

10. Anordnung nach einem der Ansprüche 1 bis 9, **dadurch gekennzeichnet, dass** die Antriebseinheit (1) eine autarke Energieversorgung (10) aufweist.

11. Anordnung nach Anspruch 10 **dadurch gekennzeichnet, dass** die autarke Energieversorgung (10) und die Steuereinheit (9) am Basisteil (3) vorgesehen sind.

12. Anordnung nach einem der Ansprüche 1 bis 11 **dadurch gekennzeichnet, dass** der Handwagen ein Bollerwagen (2) ist.

## Claims

1. An arrangement comprising a drive unit (1) and a hand cart, wherein
the drive unit has a mechanical interface, which is designed for connection to the hand cart, interface means, at least one wheel (7), which is driven by means of an electric drive (8), a control unit (9), which is designed for controlling the electric drive (8), and operating elements, by the actuation of which control commands for the control unit (9) can be generated,
the drive unit having a base part (3), on which said at least one wheel (7) and the electric drive (8) are mounted, and the interface means connected in an articulated manner to this base part (3), an articulated connection (4) being provided between the base part (3) and the interface means, which articulated connection (4) forms means for adjusting the height of the interface means,
**characterised in that** angles of inclination between the base part (3) and the interface means are stabilised by spring forces of spring elements (13) provided in the articulated connection (4).

2. An arrangement according to claim 1, **characterised in that** the drive unit (1) is a modular unit which can be mounted on a hand cart as a retrofit kit.

3. An arrangement according to one of the claims 1 or 2, **characterised in that** the mechanical interface is designed for connection to different hand carts.

4. An arrangement according to one of the claims 1 to 3, **characterised in that** the interface means comprise first and second fixing means which can be fixed in different height positions on the hand cart.

5. An arrangement according to claim 4, **characterised in that** the interface means comprise a transverse support (14), at the longitudinal ends of which the receptacles (15) forming the first fixing means are mounted so as to be retractable and extendable.

6. An arrangement according to claim 5, **characterised in that** two locking pins (16) mounted on a support (5) are provided as second fixing means, the cross support (14) being mounted on the support (5).

7. An arrangement according to one of the claims 1 to 6, **characterised in that** the drive unit has a footboard.

8. An arrangement according to any one of claims 1 to 7, **characterised in that** the operating elements and the control unit (9) communicate via a contactless data transmission link.

9. An arrangement according to claim 8, **characterised in that** the contactless data transmission link is a Bluetooth connection.

10. An arrangement according to one of claims 1 to 9, **characterised in that** the drive unit (1) has a self-sufficient power supply (10).

11. An arrangement according to claim 10, **characterised in that** the independent power supply (10) and the control unit (9) are provided on the base part (3).

12. An arrangement according to one of the claims 1 to 11, **characterised in that** the hand cart is a boiler cart (2).

## Revendications

1. Dispositif comprenant une unité d'entraînement (1) et un chariot à main, dans lequel
l'unité d'entraînement comporte une interface mécanique conçue pour être reliée au chariot à main, des moyens d'interface, au moins une roue (7) entraînée par un entraînement électrique (8), une unité de commande (9) conçue pour commander l'entraînement électrique (8), et des éléments de commande permettant de générer des ordres de commande pour l'unité de commande (9),
l'unité d'entraînement comporte une partie de base (3), sur laquelle sont montées au moins une roue (7) et l'entraînement électrique (8), et les moyens d'interface reliés de manière articulée à cette partie de base (3), une connexion articulée (4) étant prévue entre la partie de base (3) et les moyens d'interface, laquelle connexion articulée (4) constitue un moyen de réglage de la hauteur des moyens d'interface,
**caractérisé par le fait que** les angles d'inclinaison entre la partie de base (3) et le moyen d'interface sont stabilisés par les forces de ressort des éléments de ressort (13) prévus dans la connexion articulée (4).

2. Dispositif selon la revendication 1, **caractérisé par le fait que** l'unité d'entraînement (1) est une unité modulaire qui peut être montée sur un chariot à main en tant que kit d'adaptation.

3. Dispositif selon l'une des revendications 1 ou 2, **caractérisé par le fait que** l'interface mécanique est conçue pour être connectée à différents chariots à main.

4. Dispositif selon l'une des revendications 1 à 3, **caractérisé par le fait que** les moyens d'interface comprennent des premiers et des seconds moyens de fixation qui peuvent être fixés à différentes hauteurs sur le chariot à main.

5. Dispositif selon la revendication 4, **caractérisé en ce que** les moyens d'interface comprennent un support transversal (14), aux extrémités longitudinales duquel les réceptacles (15) formant les premiers moyens de fixation sont montés de manière à être rétractables et extensibles.

6. Dispositif selon la revendication 5, **caractérisé en ce que** deux goupilles de verrouillage (16) montées sur un support (5) sont prévues comme seconds moyens de fixation, le support transversal (14) étant monté sur le support (5).

7. Dispositif selon l'une des revendications 1 à 6, **caractérisé par le fait que** l'unité d'entraînement comporte un marchepied.

8. Dispositif selon l'une des revendications 1 à 7, **caractérisé en ce que** les éléments de commande et l'unité de contrôle (9) communiquent par une liaison de transmission de données sans contact.

9. Dispositif selon la revendication 8, **caractérisé en ce que** la liaison de transmission de données sans contact est une connexion Bluetooth.

10. Dispositif selon l'une des revendications 1 à 9, **caractérisé par le fait que** l'unité d'entraînement (1) est dotée d'une alimentation électrique autonome (10).

11. Dispositif selon la revendication 10, **caractérisé en ce que** l'alimentation électrique indépendante (10) et l'unité de commande (9) sont fournies sur la partie de base (3).

12. Dispositif selon l'une des revendications 1 à 11, **caractérisé par le fait que** le chariot à main est un chariot Boller (2).
